# EUROPÄISCHE PATENTSCHRIFT

(11) **EP 1 356 724 B1**
(45) Veröffentlichungstag und Bekanntmachung des Hinweises auf die Patenterteilung: **07.07.2004**
(21) Anmeldenummer: 03008328.1
(22) Anmeldetag: 10.04.2003
(51) Int. Cl.: A01K 5/02, A01K 5/01, A01K 7/02

(54) **Füllstandsmessgerät für Futtertröge**
Filling level measuring device for feed troughs
Mesureur de niveau pour des mangeoires

(30) Priorität: 06.11.2002 DE 20217217 U; 24.04.2002 DE 20206546 U
(43) Veröffentlichungstag der Anmeldung: 29.10.2003
(73) Patentinhaber: HAAKE, Hinrich, 22926 Ahrensburg (DE)
(72) Erfinder: HAAKE, Hinrich, 22926 Ahrensburg (DE)
(74) Vertreter: DIEHL GLAESER HILTL & PARTNER

(56) Entgegenhaltungen:
- EP-A- 0 856 252
- DE-A- 10 010 781
- DE-A- 19 623 356
- DE-A- 19 828 195
- US-A- 4 498 424
- US-A- 6 062 166
- US-B1- 6 199 512

## Beschreibung

Die Erfindung bezieht sich auf ein Füllstandsmessgerät für Futtertröge bei der Aufzucht von Ferkeln und Babyferkeln mit füllstoffhaltigem Flüssigfutter, aufweisend einen stabförmigen inden Futtertrog hineinragenden Sensor, dessen freies Ende mit Abstand zum Boden des Troges angeordnet ist.

Bei der Aufzucht von Ferkeln werden Futtertröge eingesetzt, die je nach Größe des Stalles eine mehr oder wenige große Längenerstreckung aufweisen. Dabei wird oft so vorgegangen, dass nicht jedem Ferkel ein Futterplatz zur Verfügung gestellt wird, sondern dass zur gleichen Zeit nur die Mehrzahl der Ferkel nach Einfüllen des Futters einen Futterplatz findet. Dies hat aber den Nachteil, dass die stärkeren Tiere sich gegenüber den schwächeren durchsetzen und nicht nur die für sie vorgesehene Futtermenge aufnehmen, sondern darüber hinaus auch die für die schwächere Tiere vorgesehene Menge an Futter fressen. Die schwächeren Tiere finden nur dann einen Platz am Futtertrog, wenn dieser bereits leer gefressen ist.

Wenn man nun aus diesem Grund den Futtertrog verlängern würde, bedeutet dies nicht allein eine höhere Investition, sondern dies führt auch dazu, dass die Füllstandshöhe des Flüssigfutters geringer wird, da die gleiche Menge an Futter über eine größere Fläche verteilt wird. Wesentlicher Nachteil einer solchen Maßnahme ist, dass die Messung des Füllstandes im Trog schwieriger wird, da entsprechend auch kleinere Abstände zwischen der Messspitze des Sensors und dem Boden des Futtertroges erfasst werden müssen.

Bislang arbeiten bekannte Füllstandsmessgeräte, die hier eingesetzt werden, auf der Basis der Messung des elektrischen Widerstandes eines Stromkreises. Der Sensor selbst befindet sich innerhalb dieses Stromkreises und reicht mit seiner Spitze in das Flüssigfutter hinein, so dass ein Messstrom über das Flüssigfutter und den Trog zurück zum Messgerät fließen kann. Fließt ein solcher Strom, so bedeutet dies, dass sich im Trog Futter befindet, und zwar mindestens bis zur Höhe, die dem Abstand Messspitze - Boden des Troges entspricht. Fließt hingegen kein Strom, so bedeutet dies, dass der Futtertrog leer ist. Die hier im allgemeinen mit Hilfe eines solches Messverfahrens bewältigten Abstände bzw. Füllstände liegen im Bereich von einigen cm. Bei der Aufzucht von größeren Ferkeln kann ein solches Messverfahren noch brauchbare Messergebnisse liefern. Verlängert man hingegen den Trog aus den oben angegebenen Gründen, so führt dies also zu kleineren Abständen und damit zu Messproblemen. Besonders kritisch werden diese Messungen dann, wenn über den Futtertrog sog. Babyferkel mit Futter versorgt werden sollen. Dann geht es um relativ kleine Futtermengen, d.h. nur geringe Füllstandshöhen im Futtertrog.

Hier nun will die vorliegende Erfindung ansetzen und aufgabengemäß ein Füllstandsmessgerät schaffen, das selbst bei kleinen Futtermittelmengen und insbesondere bei der Aufzucht von Babyferkeln eingesetzt werden kann und hinreichend genaue Erkenntnisse über die Füllhöhe im Trog liefert.

Erreicht wird dies durch ein Füllstandsmessgerät der eingangs genannten Art, das dadurch geprägt ist, dass der Sensor als Rohr ausgebildet ist, das mit Druckluftimpulsen beaufschlagbar ist und am Rohr eine Abzweigleitung zu einem Druckwandler vorgesehen ist, und dass der Druckwandler unterschiedliche elektronische Signale erzeugt, die anzeigen, ob sich ein Druck im Rohr aufbaut oder nicht.

Gemäß der Erfindung arbeitet das Füllstandsmessgerät mit Druckluft, so dass am Ausgang des Sensorrohres Druckmittel austritt und entweder direkt in die Umgebung gelangt oder durch das Futter, das sich dort befindet, hindurchgeleitet wird. Muss das Druckmittel durch das Futter hindurch, so führt dies zu einem Druckaufbau im Sensorrohr. Über die Abzweigleitung kann dieser Druckanstieg von einem Druckwandler erfasst werden, der ein Ausgangssignal erzeugt, das in irgendeiner Datenverarbeitungsanlage beispielsweise verarbeitet oder angezeigt werden kann.

Bei einer weiteren Ausführungsform der Erfindung ist an das Sensorrohr eine Spülwasserzufuhrleitung angeschlossen. Daher kann das Sensorrohr nicht nur mit Druckluft, sondern auch mit Spülwasser oder einem Wasser-Luft-Gemisch beaufschlagt werden. Dies kann in der Form geschehen, dass entweder Wasser oder Druckluft durch das Sensorrohr strömt oder dass eine Mischung aus Luft und Wasser hergestellt wird. In jedem Fall wird eine Reinigung des Bereichs zwischen Sensorrohrende und Trog erzeugt.

Nach einer weiteren Ausführungsform ist am Sensorrohr ein Erdungsstab angebracht und mit Hilfe einer elektrischen Widerstandsmesseinrichtung kann der elektrische Widerstand zwischen dem Erdungsstab und dem Futtertrog ermittelt werden. Ist dieser Widerstand gering, befindet sich also noch Futter im Trog. Ist dieser Widerstand hoch, so haben die Ferkel den Trog leer gefressen. Die ermittelten Widerstandswerte werden in einer Datenverarbeitungsanlage verarbeitet und entsprechend wird die zukünftige Futterausgabe eingestellt.

Bei dem Füllstandsmessgerät gemäß der Erfindung können Messungen kurzzeitig hintereinander erfolgen, indem aufeinanderfolgend Druckimpulse abgegeben und ausgewertet werden. Dadurch ist die Gefahr, dass Fehlmessungen in die Futtermittelversorgung eingehen, gering.

Selbst wenn beispielsweise im Bereich unterhalb des Rohrsensors sich Futtermittelreste befinden, also dadurch, dass die Ferkel in diesen Bereich nicht hineingelangen können, kann der dort vorhandene Futtermittelrest durch Druckluft oder ein Wasser-Luft-Gemisch beseitigt werden. Dadurch können keine Verstopfungen auftreten, die fehlinterpretiert werden könnten. Bei bekannten Füllstandsmessgeräten verbleibt in diesem Bereich tatsächlich ein Futtermittelrest und dieser kann nicht ohne Eingreifen des Bedienungspersonals beseitigt werden. Dies führt ansonsten zur Anzeige, nämlich dass noch Futtermittel im Futtertrog vorhanden ist, so dass kein neues Futtermittel nachgeliefert wird. Dieser verbleibende Futtermittelrest kann sich zersetzen und zur Verunreinigung des Futters führen. Bei dem Füllstandsmessgerät gemäß der Erfindung aber kann dieser Futtermittelrest selbsttätig abgereinigt werden.

Bei dem Füllstandsmessgerät gemäß der Erfindung können Abstände zwischen Sensorende und Boden des Futtertroges von einigen Millimetern bewältigt werden, d.h. dieses Füllstandsmessgerät ist insbesondere für die Aufzucht von Babyferkeln geeignet.

Nach bevorzugten Ausführungsformen der Erfindung könnten viele Futtertröge mit Hilfe eines einzigen Druckwandlers überwacht werden, so dass der apparative Aufwand sich im Vergleich zu einer Anordnung verringert, bei der zu jedem Rohrsensor ein Druckwandler gehört.

Das Füllstandsmessgerät gemäß der Erfindung kann auch mit einem solchen Messgerät kombiniert werden, das auf der Basis der elektrischen Widerstandsmessung arbeitet. In diesem Falle wird der bisherige stabförmige Sensor durch einen rohrförmigen Sensor ersetzt, so dass wahlweise die bisherige elektrische Messung und zusätzlich die Messung über Druckluft gemäß der Erfindung durchgeführt werden kann.

Die Erfindung wird nachstehend anhand der Zeichnung beispielsweise erläutert.
- Fig.1: ist eine schematische Darstellung eines Füllstandsmessungs-Systems mit mehreren Füllstandsmessgeräten gemäß der Erfindung.
- Fig.2: zeigt eine abgewandelte Ausführungsform eines Füllstandsmessgerätes gemäß der Erfindung.

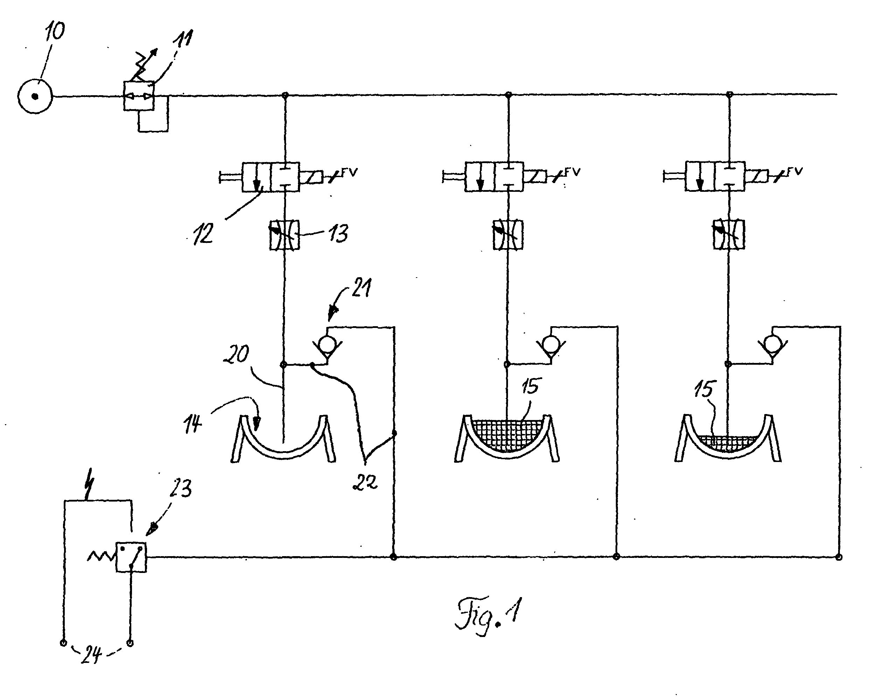

In Fig.1 sind drei Futtertröge in Querschnittsansicht gezeigt, wobei der linksseitig gezeigte Futtertrog 14 ohne Futter ist, während die anderen beiden Futtertröge mehr oder weniger mit Futter 15 gefüllt sind.

In die Futtertröge 14 ragt jeweils ein rohrförmiger Sensor 20 hinein, wobei das freie Ende des Rohrsensors 20 nur wenige Millimeter oberhalb des Bodens des Futtertroges 14 endet.

Der Rohrsensor 20 wird über eine Drossel 13, ein Ventil 12, einen Druckminderer 11 aus einer Druckquelle 10 mit Druck versorgt, und zwar mit Druckimpulsen hinlänglicher Pulsdauer.

Der Rohrsensor 20 ist mit einer Abzweigleitung 22 ausgebildet, welche in der gezeigten Ausführungsform ein Rückschlagventil 21 enthält. Die Leitung 22 gelangt zu einem Druckwandler 23, der Druckeingänge in elektronische Ausgänge 24 umwandelt.

Es liegt auf der Hand, dass ein Druckimpuls über das entsprechend geschaltete Ventil 12 dazu führt, dass Druckmittel ungehindert aus dem in Fig.1 links gezeigten Sensor 20 austritt, so dass der Druckwandler 23 keinen Druckanstieg feststellt. Das entsprechende elektronische Signal bedeutet, dass der Trog 14 leer ist.

Anders verhält es sich bei den beiden rechtsseitig gezeigten Trögen. Hier wird der Druckluftimpuls durch das Futter 15 hindurchgeleitet, so dass über die Leitungen 22 am Druckwandler 23 Druck anliegt, der zu einem entsprechenden elektronischen Drucksignal 24 führt. Je nach Größe des entsprechenden Signals kann genau auf die Füllstandshöhe zurückgeschlossen werden. Wesentlich ist, dass sich die Aussage, dass der Futtertrog leer ist, durch ein Signal bemerkbar macht, das sich eindeutig von den Signalen unterscheidet, bei denen das Druckmittel durch das Futter hindurch geleitet wird.

Mit dem Füllstandsmessgerät gemäß der Erfindung kann auf ein Fütterungsverfahren übergegangen werden, bei welchem ein Trog immer dann nachgefüllt wird, wenn zuvor festgestellt worden ist, dass er leer gewesen ist, also kann eine Fütterung nach Bedarf realisiert werden.

Bei Babyferkeln spricht man von Tieren, die ein Gewicht im Bereich von 4 bis 6 kg haben und eine tägliche Flüssigfuttermenge unterhalb von 1 1 benötigen. Ferkel haben ein Gewicht im Bereich von 30 bis 40 kg und die tägliche Flüssigfutteraufnahme liegt bei ca. 9 l.

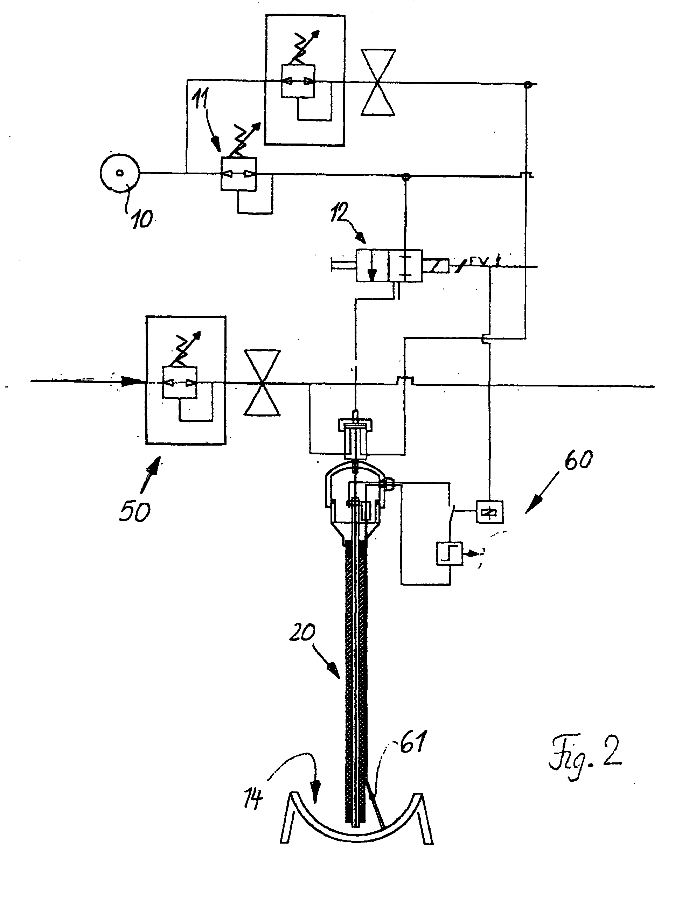

In der Ausführungsform nach Fig. 2 ist weiterhin noch ein Wasserzufuhrrohr 50 an das Sensorrohr 20 angeschlossen. Dies ist in der Fig. 2 lediglich schematisch gezeigt und soll verdeutlichen, dass gezielt und gesteuert Wasser zusammen mit Luft über das Sensorrohr 20 abgegeben werden kann.

Weiterhin ist in Fig. 2 noch eine elektrische Widerstandsmesseinrichtung 60 gezeigt, so wie diese Messeinrichtungen im Handel erhältlich sind. Bei der in Fig. 2 gezeigten Ausführungsform wird der elektrische Widerstand zwischen einem Erdungsstab 61 und dem Trog 14 gemessen und die entsprechenden Werte werden herangezogen, um die zukünftige Futtermittelzugabe entsprechend einzusellen.

## Patentansprüche

1. Füllstandsmessgerät für Futtertröge bei der Aufzucht von Ferkeln und Babyferkeln mit füllstoffhaltigem Flüssigfutter, aufweisend einen stabförmigen in den Futtertrog hineinragenden Sensor, dessen freies Ende mit Abstand zum Boden des Troges angeordnet ist, **dadurch gekennzeichnet, dass** der Sensor als Rohr (20) ausgebildet ist, das mit Druckluftimpulsen (10, 11, 12, 13) beaufschlagbar ist und am Rohr (20) eine Abzweigleitung (22) zu einem Druckwandler (23) vorgesehen ist, und dass der Druckwandler (23) unterschiedliche elektronische Signale (24) erzeugt, die anzeigen, ob sich ein Druck im Rohr (20) aufbaut oder nicht.

2. Füllstandsmessgerät nach Anspruch 1, **dadurch gekennzeichnet, dass** in der Abzweigleitung (22) ein Rückschlagventil (21) angeordnet ist.

3. Füllstandsmessgerät nach Anspruch 2, **dadurch gekennzeichnet, dass** die Abzweigleitungen (22) mehrerer Sensoren (21) mit einem gemeinsamen Druckwandler (23) verbunden sind.

4. Füllstandsmessgerät nach mindestens einem der Ansprüche 1 bis 3, **dadurch gekennzeichnet, dass** an das Sensorrohr (20) eine Spülwasserzufuhrleitung (50) zwecks Ausgabe eines Luft-Wasser-Gemisches zur Reinigung des Troges angeschlossen ist.

5. Füllstandsmessgerät nach mindestens einem der Ansprüche 1 bis 4, **dadurch gekennzeichnet, dass** am Sensorrohr (20) ein Erdungsstab (61) angebracht ist, mit dessen Hilfe der elektrische Widerstand zwischen dem Sensorrohrende bzw. Erdungsstab (61) und dem Futtertrog gemessen wird.

## Claims

1. Level measuring device for feeding troughs used in the raising of piglets and baby piglets with filled liquid feed, comprising a rod-shaped sensor projecting into the feeding trough, the free end of which being arranged with a distance to the bottom of the trough, **characterised in that** the sensor is formed as a tube (20), upon which compressed-air pulses (10, 11, 12, 13) can act, and that a branch line (22) to a pressure transmitter (23) is provided at the tube (20), and that the pressure transmitter (23) generates different electronic signals (24) indicating whether or not a pressure is building up in the tube (20).

2. Level measuring device according to claim 1, **characterised in that** a check valve (21) is provided in the branch line (22)

3. Level measuring device according to claim 2, **characterised in that** the branch lines (22) of several sensors (21) are connected to a common pressure transmitter (23).

4. Level measuring device according to at least one of the claims 1 to 3, **characterised in that** a washing water supply line (50) is connected to the sensor tube (20) for the discharge of an air-water mixture for the cleaning of the trough.

5. Level measuring device according to at least one of the claims 1 to 4, **characterised in that** an earth rod (61) is mounted at the sensor tube (20), by means of which the electric resistance between the sensor end or the earthing rod (61), respectively, and the feeding trough is measured.

## Revendications

1. Appareil de mesure de niveau pour des auges pour l'élevage de porcelets avec de la nourriture liquide contenant une matière de remplissage, comprenant un capteur en forme de tige dépassant dans l'auge, dont l'extrémité libre est à une certaine distance du fond de l'auge, **caractérisé en ce que** le capteur est conçu comme un tube (20) pouvant être alimenté par des impulsions d'air comprimé (10, 11, 12, 13) et au niveau du tube (20) est prévu un embranchement (22) vers un convertisseur de pression (23), et **en ce que** le convertisseur de pression (23) génère différents signaux électroniques (24) qui indiquent si une pression règne ou non dans le tube (20).

2. Appareil de mesure de niveau selon la revendication 1, **caractérisé en ce que** dans l'embranchement (22), se trouve une soupape de retour (21).

3. Appareil de mesure de niveau selon la revendication 2, **caractérisé en ce que** les embranchements (22) de plusieurs capteurs (21) sont reliés à un convertisseur de pression commun (23).

4. Appareil de mesure de niveau selon au moins l'une des revendications 1 à 3, **caractérisé en ce que**, au tube du capteur (20), est raccordée une conduite d'alimentation d'eau de nettoyage (50) afin de délivrer un mélange air-eau pour le nettoyage de l'auge.

5. Appareil de mesure de niveau selon au moins l'une des revendications 1 à 4, **caractérisé en ce que**, au niveau du tube du capteur (20), se trouve une tige de mise à la terre (61), à l'aide de laquelle la résistance électrique entre l'extrémité du tube du capteur ou la tige de mise à la terre (61) et l'auge est mesurée.
